# EUROPÄISCHE PATENTSCHRIFT

(11) **EP 1 101 326 B1**
(45) Veröffentlichungstag und Bekanntmachung des Hinweises auf die Patenterteilung: **23.11.2005**
(21) Anmeldenummer: 99942745.3
(22) Anmeldetag: 01.07.1999
(51) Int. Cl.: H04L 12/18, H04L 12/56, H04L 29/06

(54) **VERFAHREN ZUM ÜBERMITTELN VON DATENPAKETEN AN MEHRERE EMPFÄNGER IN EINEM HETEROGENEN KOMMUNIKATIONSNETZ**
METHOD FOR TRANSMITTING DATA PACKETS TO A PLURALITY OF RECEIVERS IN A HETEROGENEOUS COMMUNICATIONS NETWORK
PROCEDE DE TRANSMISSION DE PAQUETS DE DONNEES A PLUSIEURS RECEPTEURS DANS UN RESEAU DE COMMUNICATION HETEROGENE

(30) Priorität: 28.07.1998 DE 19833931
(43) Veröffentlichungstag der Anmeldung: 23.05.2001
(73) Patentinhaber: SIEMENS AKTIENGESELLSCHAFT, 80333 München (DE)
(72) Erfinder: HUMMEL, Heinrich, D-85232 Günding (DE)
(86) Internationale Anmeldenummer: PCT/DE1999/001927
(87) Internationale Veröffentlichungsnummer: WO 2000/007333

(56) Entgegenhaltungen:
- EP-A- 0 579 567
- US-A- 5 412 649
- MOY J: "MULTICAST ROUTING EXTENSIONS FOR OSPF" COMMUNICATIONS OF THE ASSOCIATION FOR COMPUTING MACHINERY,US,ASSOCIATION FOR COMPUTING MACHINERY. NEW YORK, Bd. 37, Nr. 8, Seite 61-66,114 XP000484282 ISSN: 0001-0782
- WEN-TSUEN CHEN, PI-RONG SHEU, YAW-REN CHANG: "Efficient multicast source routing scheme" COMPUTER COMMUNICATIONS, Bd. 16, - 10. Oktober 1993 (1993-10-10) Seiten 662-666, XP000394160 Oxford -GB

## Beschreibung

In zeitgemäßen, aus einer Vielzahl von Netzknoten bestehenden Kommunikationsnetzen, werden Daten häufig innerhalb von Datenpaketen übermittelt. Zugeordnet zu einem Datenpaket wird dabei in der Regel eine sogenannte Routingangabe übertragen, die einen Ziel-Netzknoten oder ein Ziel-Endgerät und gegebenenfalls auch einen dorthin führenden Leitweg spezifiziert. Anhand der Routingangabe - oder Teilen davon - wird von an der Datenübermittlung beteiligten Netzknoten jeweils bestimmt, zu welchem Netzknoten ein empfangenes Datenpaket weiterzuleiten ist, um dieses durch das Kommunikationsnetz zu einem Ziel-Netzknoten oder Ziel-Endgerät zu leiten. Falls eine im Ursprungs-Netzknoten gebildete Routingangabe bereits einen vollständigen Leitweg zu einem Ziel-Netzknoten oder Ziel-Endgerät spezifiziert, spricht man auch von explizitem Routing "(Explicit Routing" oder "Source Routing"). In diesem Fall legt die Routingangabe für jeden auf dem Leitweg liegenden Netzknoten fest, an welchen Netzknoten der Routingangabe zugeordnete Datenpakete jeweils weiterzuleiten sind. Eine alternative Methode stellt das sogenannte "hop-by-hop Routing" dar, bei dem eine im Ursprungs-Netzknoten gebildete Routingangabe zwar einen Ziel-Netzknoten oder ein Ziel-Endgerät spezifiziert, aber keinen dorthin führenden Leitweg festlegt. Der konkrete Leitweg wird statt dessen von den an der Übertragung der Datenpakete beteiligten Netzknoten bestimmt, in denen jeweils selbständig anhand der Routingangabe und der Netzwerktopologie entschieden wird, an welchen Netzknoten die Datenpakete jeweils weiterzuleiten sind. Desweiteren beschreibt EP-A-0 579 567 ein explizites *Routing bis zu einem Verzweigangsknoten, von dem aus die Datenpakete automatisch an alle angeschlossenen knoten weitergeleitet werden.

Eine Vielzahl von Routingverfahren kommen gegenwärtig für eine Datenübertragung im Internet zur Anwendung. Eine Datenübertragung im Internet basiert auf dem sogenannten Internet-Protokoll (IP), bei dem jedes zu übertragende Datenpaket eine ein Ziel-Endgerät identifizierende, sogenannte IP-Adresse als Routingangabe enthält. Eine solche Routingangabe läßt sich zwar einerseits sehr einfach erzeugen, erfordert aber andererseits von an einer Datenübertragung beteiligten Netzknoten eine relativ zeitaufwendige Auswertung der IP-Adresse, um daraus die zum Weiterleiten der Datenpakete notwendige Information zu gewinnen.

Bekannte Routingverfahren zur Reduzierung dieses Aufwandes sind sogenannte Label-Switching-Verfahren, bei denen jedem mit einer IP-Adresse versehenen Datenpaket eine zusätzliche Routingangabe vorangestellt wird, aus der sich die zum Weiterleiten der Datenpakete notwendige Information sehr schnell gewinnen läßt. Die zusätzliche Routingangabe besteht dabei im wesentlichen aus einem oder mehreren Kennsätzen, die als Tabellenindizes für in Netzknoten vorgesehene Leitweginformationstabellen benutzt werden können. Eine Bestimmung der zum Weiterleiten der Datenpakete notwendigen Information kann damit auf Tabellenzugriffe reduziert werden. Die ursprüngliche Routingangabe - d.h. die IP-Adresse - wird weiterhin mitübertragen, um die Datenpakete auch in Teilbereichen des Kommunikationsnetzes weiterleiten zu können, die nicht für ein Label-Switching-Verfahren ausgelegt sind. Beim Übergang in einen solchen Teilbereich wird die zusätzliche Routingangabe wieder entfernt und die Datenpakete gemäß Internet-Protokoll anhand der IP-Adresse weitergeleitet.

Ein Label-Switching-Verfahren erweist sich insbesondere in Verbindung mit explizitem Routing als vorteilhaft, weil in diesem Fall eine Leitwegbestimmung, z.B. nach einem Dijkstra-Routingalgorithmus, nur im Ursprungs-Netzknoten ausgeführt werden muß. Bei einem auf explizitem Routing basierenden Label-Switching-Verfahren wird in der Routingangabe eine Folge von Kennsätzen zusammengefaßt, die jeweils für jeden auf dem Leitweg liegenden Netzknoten denjenigen Netzknoten bezeichnen, zu dem der Routingangabe zugeordnete Datenpakete weiterzuleiten sind.

Bislang weisen Label-Switching-Verfahren in Verbindung mit explizitem Routing jedoch noch eine Schwäche auf. So ist bisher noch kein Weg bekannt, mit diesen Verfahren ein Datenpaket durch explizites Routing parallel an mehrere Ziel-Netzknoten und/oder Ziel-Endgeräte zu übermitteln. Bei Vorhandensein eines solchen, auch als "Multicast-Routing" bezeichneten Übertragungsmodus würde sich das Anwendungsspektrum eines Label-Switching-Verfahrens in Verbindung mit explizitem Routing wesentlich erweitern. Insbesondere könnten damit Anwendungen, wie z.B. Punkt-zu-Mehrpunkt-Verbindungen und Konferenzschaltungen, auf einfachere Weise als bisher realisiert werden.

Aufgabe der vorliegenden Erfindung ist es, ein Verfahren zum Übermitteln von Datenpaketen oder Verbindungsaufbaumeldungen anzugeben, mit dem ein Datenpaket oder eine Verbindungsaufbaumeldung anhand von für unterschiedliche Routingverfahren vorgesehenen Routingangaben zwischen einem Ursprungsnetzknoten und mehreren Ziel-Netzknoten und/oder Ziel-Endgeräten übertragen werden kann.

Gelöst wird diese Aufgabe erfindungsgemäß durch ein Verfahren mit den Merkmalen des Patentanspruchs 1 bzw. des Patentanspruchs 2.

Ein Verfahren nach Patentanspruch 1 ist dabei insbesondere bei einer Übermittlung von Datenpaketen, ein Verfahren nach Patentanspruch 2 insbesondere bei einer Übermittlung von Verbindungsaufbaumeldungen relevant.

Nachfolgend werden die Erfindung und deren Vorteile vorwiegend im Hinblick auf eine Übermittlung von Datenpaketen betrachtet. Gleichwohl gelten die auf die Übermittlung von Datenpaketen bezogenen Ausführungen sinngemäß auch für eine Übermittlung von Verbindungsaufbaumeldungen und Verbindungsabbaumeldungen.

Ein erfindungsgemäßes Verfahren wird im wesentlichen von Routingeinrichtungen von an der Übermittlung von Datenpaketen beteiligten Netzknoten ausgeführt. In diesen Routingeinrichtungen werden jeweils eine oder mehrere einem zu übertragenden Datenpaket zugeordnete Routingangaben ausgewertet und abhängig davon das Datenpaket weitergeleitet.

Ein Netzknoten, zu dem das Datenpaket von einer Routingeinrichtung weiterzuleiten ist, wird durch eine in der Routingangabe enthaltene Weiterleitungsinformation bestimmt. Diese kann beispielsweise aus einer diesen Netzknoten identifizierenden Information (z.B. einer IP-Adresse), einem im Zusammenhang mit Label-Switching-Verfahren bekannten Kennsatz, oder einer einen Ausgangsport, über den das Datenpaket zu diesem Netzknoten weiterzuleiten ist, bezeichnenden Information bestehen. Zusätzlich zu solchen, einen Netzknoten bestimmenden Angaben, sind in der ersten, im Ursprungs-Netzknoten gebildeten Routingangabe erfindungsgemäß auch Verzweigungen des Leitwegs anzeigende Verzweigungsinformationen und ein oder mehrere Verweise auf weitere Routingangaben enthalten. Eine Verzweigungsinformation und ein Verweis auf eine weitere Routingangabe sind dabei jeweils auf einen bestimmten Netzknoten bezogen. Eine Verzweigungsinformation veranlaßt den Netzknoten, auf den sie bezogen ist dazu, das Datenpaket statt an einen einzelnen Netzknoten an mehrere Netzknoten weiterzuleiten. Demgegenüber veranlaßt ein Netzknoten bei einem auf ihn bezogenen Verweis auf eine weitere Routingangabe ein Auswerten dieser weiteren Routingangabe sowie ein Weiterleiten des Datenpakets an in dieser weiteren Routingangabe bezeichnete Netzknoten.

Das erfindungsgemäßes Verfahren läßt sich besonders vorteilhaft in heterogenen Kommunikationsnetzen, d.h. in Kommunikationsnetzen mit mehreren unterschiedlich strukturierten Teilnetzen, wie z.B. dem Internet, anwenden. In solchen Kommunikationsnetzen werden nämlich in einzelnen Teilnetzen oft speziell auf diese abgestimmte Routingverfahren eingesetzt, die jeweils unterschiedliche Routingangaben voraussetzen. Ein Beispiel hierfür sind Teilnetze, die für ein Label-Switching-Verfahren ausgelegt sind und deren Routingeinrichtungen zur schnelleren Weiterleitung von Datenpaketen eine Folge von Kennsätzen als Routingangabe benötigen. Mit einem erfindungsgemäßen Verfahren lassen sich für einzelne Teilnetze vorteilhafte Routingangaben bereits im Ursprungs-Netzknoten berücksichtigen oder erzeugen und über die dort gebildete erste Routingangabe in den Routingprozeß einbeziehen. Bei einer Leitwegbestimmung läßt sich ein Routingprozeß durch Einbeziehung mehrerer alternativer Routingangaben in vielen Fällen noch optimieren.

Durch das erfindungsgemäße Verfahren lassen sich die Vorteile sehr schneller, auf einer speziell angepaßten Form der Routingangabe beruhender Routingverfahren, wie z.B. von Label-Switching-Verfahren, auch auf einen Multicast-Übertragungsmodus mit explizitem Routing übertragen.

Ein weiterer Vorteil des erfindungsgemäßen Verfahrens besteht darin, daß ein Datenpaket ohne Änderung des dem erfindungsgemäßen Verfahren zugrunde liegenden Algorithmus auch an einen einzelnen Ziel-Netzknoten oder ein einzelnes Ziel-Endgerät übermittelt werden kann. Enthält die im Ursprungs-Netzknoten gebildete erste Routingangabe nämlich weder Verzweigungsinformation noch einen Verweis auf eine weitere Routingangabe, wird das Datenpaket an nur einen Ziel-Netzknoten bzw. ein Ziel-Endgerät übermittelt.

Vorteilhafte Ausführungsformen und Weiterbildungen der Erfindung sind in den Unteransprüchen angegeben.

Jede Routingangabe kann sowohl einem einzelnen als auch mehreren zu übertragenden Datenpaketen zugeordnet werden. Während im erstgenannten Fall für jedes Datenpaket eine eigene Routingangabe, z.B. in einem dazu vorgesehen Paketkopf, zu übertragen ist, muß im zweitgenannten Fall eine Routingangabe nur einmal für alle ihr zugeordneten Datenpakete übertragen werden, die auf sie Bezug nehmen.

Nach einer vorteilhaften Weiterbildung der Erfindung wird eine mehreren Datenpaketen zugeordnete Routingangabe - zumindest in Teilen - vor diesen Datenpaketen entlang des Leitwegs übertragen, um in Netzknoten entlang des Leitwegs eine schnelle Weiterleitung der nachfolgend zu übertragenden, auf diese Routingangabe Bezug nehmenden Datenpakete vorzubereiten. Zu diesem Zweck wird in einem jeweiligen Netzknoten die Weiterleitungsinformation, die benötigt wird, um diese Datenpakete von diesem Netzknoten aus weiterzuleiten, aus dieser Routingangabe bzw. ihrem jeweils übermittelten Teil ausgelesen und in diesem Netzknoten abrufbar hinterlegt. Bei einem nachfolgend eintreffenden Datenpaket wird in der Folge die hinterlegte Weiterleitungsinformation derjenigen Routingangabe, auf die dieses Datenpaket Bezug nimmt, abgerufen und das Datenpaket in Abhängigkeit davon weitergeleitet. Eine Bezugnahme eines Datenpakets auf eine vorab übertragene Routingangabe kann beispielsweise durch eine mit diesem Datenpaket übertragene, auf diese Routingangabe verweisende Zuordnungsinformation realisiert sein.

Gemäß einer weiteren vorteilhaften Weiterbildung der Erfindung wird durch die Übermittlung einer Verbindungsaufbaumeldung in Netzknoten, die diese empfangen, jeweils eine Leitweginformation der aufzubauenden Verbindung zugeordnet hinterlegt, die denjenigen Netzknoten bezeichnet, von dem die Verbindungsaufbaumeldung jeweils empfangen wurde. Die hinterlegte Leitweginformation wird dazu benutzt, Datenpakete, die im Rahmen der aufzubauenden Verbindung von den Ziel-Netzknoten und/oder Ziel-Endgeräten zum Ursprungs-Netzknoten - also in der zur Übermittlungsrichtung der Verbindungsaufbaumeldung entgegengesetzten Richtung - zu übertragen sind, in Richtung des Ursprungsknotens weiterzuleiten. Eine Übermittlung von Datenpaketen von mehreren Datenquellen zu einem einzelnen Übertragungsziel wird häufig auch als "Merging" bezeichnet.

Besonders einfach zu realisieren ist es, wenn Verzweigungsinformation aus einer Abzweiginformation, die eine Verzweigung des Leitwegs bei einem bestimmten Netzknoten angibt und einer Verzweigungspfadendeinformation, die das Ende eines jeweiligen Leitwegzweiges anzeigt, gebildet ist. Das Ende eines sich weiter verzweigenden Leitwegzweiges kann dabei u.a. als das Ende der vollständigen Spezifizierung des Leitwegzweiges in der Routingangabe definiert sein. Die Abzweiginformation kann ihrerseits durch eine numerische Information repräsentiert sein, welche die Anzahl der zwischen Abzweigung und dem durch die Verzweigungspfadendeinformation angezeigten Ende des Leitwegzweiges liegenden Netzknoten angibt. Eine solche numerische Information kann im übrigen im Anschluß an eine zugehörige Verzweigungspfadendeinformation in die Routingangabe eingefügt werden. In diesem Fall kann nach einem Einlesen einer Verzweigungspfadendeinformation unmittelbar die zugehörige numerische Information und damit die Anzahl der Netzknoten ermittelt werden, die ausgehend vom Ende des Leitwegzweiges zurückzuzählen sind, um den Netzknoten bei dem die Verzweigung auftritt, zu bestimmen. Alternativ dazu kann die Abzweiginformation durch eine reservierte Kodeinformation repräsentiert sein, die durch ihre Position innerhalb der Routingangabe eine Verzweigung markiert.

Gemäß einer weiteren vorteilhaften Weiterbildung der Erfindung wird im Ursprungs-Netzknoten aus einer vorhandenen, einem Datenpaket zugeordneten Routingangabe eine weitere Routingangabe erzeugt und dem Datenpaket zugeordnet übertragen. Die weitere Routingangabe ist dabei für eine effiziente Auswertung in Netzknoten bestimmter Teilbereiche des Kommunikationsnetzes optimiert. Beispielsweise kann einem im Ursprungs-Netzknoten zur Weiterleitung an einen Ziel-Netzknoten oder ein Ziel-Endgerät empfangenen, nur mit einer IP-Adresse versehenen Datenpaket, eine aus der IP-Adresse abgeleitete, zur schnellen Auswertung durch ein Label-Switching-Verfahren vorgesehene Folge von Kennsätzen beigefügt werden. Damit kann das Datenpaket in denjenigen zwischen Ursprungs-Netzknoten und Ziel-Netzknoten bzw. Ziel-Endgerät liegenden Teilbereichen des Kommunikationsnetzes, die für ein Label-Switching-Verfahren ausgelegt sind, wesentlich schneller übertragen werden.

Nach einer weiteren vorteilhaften Weiterbildung werden in Kommunikationsnetzen mit unterschiedlichen Hierarchieebenen zugeordneten Netzknoten, im Ursprungs-Netzknoten Routingangaben erzeugt, die zur Auswertung in Netzknoten einer jeweiligen Hierarchieebene vorgesehen sind. In unterschiedlichen Hierarchieebenen können dabei unterschiedliche, für eine jeweilige Hierarchieebene vorteilhafte Routingverfahren vorgesehen sein. Ein Übergang des Leitwegs von einer ersten Hierarchieebene in eine zweite Hierarchieebene kann auf einfache Weise durch einen in eine für die erste Hierarchieebene gültige Routingangabe eingefügten Verweis auf eine für die zweite Hierarchieebene gültige Routingangabe veranlaßt werden.

Weiterhin können im Ursprungs-Netzknoten Routingangaben erzeugt und einem Datenpaket zugeordnet übertragen werden, die jeweils in unterschiedlichen Teilbereichen des Kommunikationsnetzes effizient ausgewertet werden können. In einem heterogenen Kommunikationsnetz, das sich aus mehreren unterschiedlich strukturierten Teilnetzen mit unterschiedlichen Routingverfahren zusammensetzt, kann beispielsweise für jedes in einem jeweiligen Teilnetz eingesetzte Routingverfahren eine für dieses Routingverfahren optimierte Routingangabe erzeugt werden.

Ein Ausführungsbeispiel der Erfindung wird nachfolgend anhand der Zeichnung näher erläutert.

Dabei zeigen
Fig 1 ein mit mehreren Routingangaben versehenes Datenpaket in schematischer Darstellung,
Fig 2 einen Vermittlungsablauf von zu mehreren Ziel-Netzknoten und Ziel-Endgeräten zu übertragenden Datenpaketen,
Fig 3 ein Ablaufdiagramm einer Routingroutine.

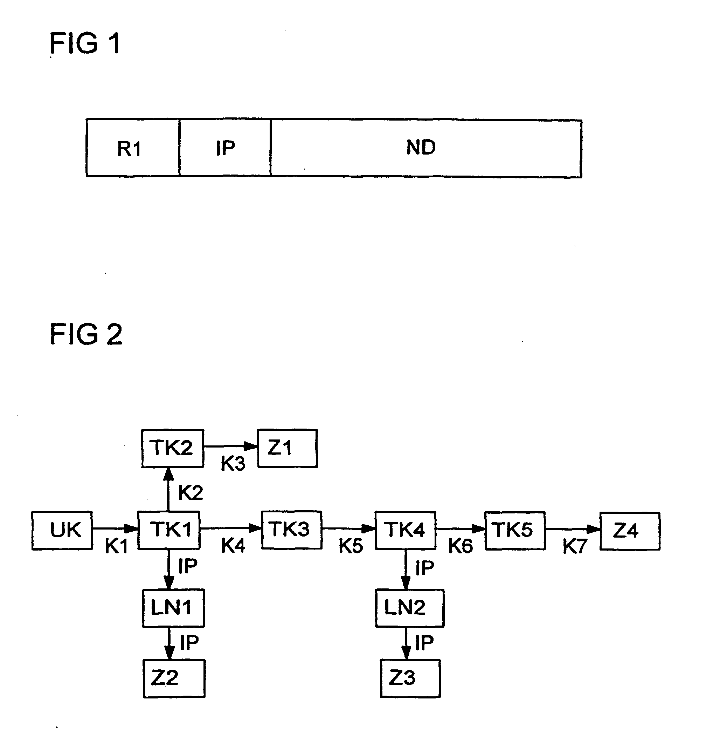

In Fig 1 ist ein Datenpaket mit Nutzdatenbereich ND schematisch dargestellt, das mit einer Folge von Kennsätzen als erster Routingangabe R1 und einer IP-Adresse IP als zweiter Routingangabe versehen ist. Die erste Routingangabe R1 und die IP-Adresse IP sind dabei zur Auswertung durch jeweils unterschiedliche Routingverfahren vorgesehen. In einem Paketkopf des Datenpaketes enthaltene Zusatzinformationen sind in Fig 1 nicht dargestellt.

Die Beschränkung auf zwei mit dem Datenpaket zu übertragenden Routingangaben ist hier lediglich als beispielhaft anzusehen und soll der Vereinfachung der nachfolgenden Beschreibung des Ausführungsbeispiels dienen.

Die erste Routingangabe R1 enthält für Netzknoten, die an einer Übermittlung des Datenpakets beteiligt sind, jeweils einen oder mehrere Kennsätze, durch die festgelegt wird, über welche Ausgangsports eines betreffenden Netzknoten das empfangene Datenpaket jeweils weiterzuleiten ist. Solche Kennsätze werden häufig auch als Port- oder Linkidentifikatoren bezeichnet. Neben den einen Ausgangsport identifizierenden Kennsätzen sind bei einem erfindungsgemäßen Verfahren auch reservierte Kennsätze zur Anzeige einer Leitwegverzweigung und zum Verweis auf eine andere Routingangabe vorgesehen. Die eine Leitwegverzweigung anzeigenden, reservierten Kennsätze werden in diesem Ausführungsbeispiel durch die Klammersymbole '(' und ')' repräsentiert. Weiterhin wird ein Verweis auf die IP-Adresse IP durch die ansonsten nicht sinnvolle Kombination '( )' dieser Klammersymbole repräsentiert. Da in diesem Ausführungsbeispiel außer der IP-Adresse IP keine weiteren Routingangaben vorgesehen sind, auf die von der ersten Routingangabe R1 aus verwiesen werden könnte, ist diese unspezifizierte Repräsentation eines Verweises eindeutig und damit ausreichend. Bei Vorhandensein einer größeren Anzahl von Routingangaben, müßte einem Verweis auf eine andere Routingangabe noch eine Information zur eindeutigen Identifizierung der Routingangabe, auf die verwiesen wird, hinzugefügt werden.

Anhand der einen Ziel-Netzknoten oder ein Ziel-Endgerät identifizierenden IP-Adresse IP kann das Datenpaket auch in Teilbereichen des Kommunikationsnetzes weitergeleitet werden, die nicht für ein erfindungsgemäßes Verfahren ausgelegt sind. Bei einem Übergang des Datenpakets in einen solchen Teilbereich wird die ersten Routingangabe R1 vom Datenpaket entfernt und dieses gemäß Internet-Protokoll weitergeleitet. Bei Version 6 dieses Protokolls (IPv6) kann die IP-Adresse IP auch mehrere Ziel-Netzknoten und/oder Ziel-Endgeräte identifizieren, zu denen das Datenpaket dann parallel übertragen wird.

Fig 2 zeigt einen beispielhaften Vermittlungsablauf des von einem Ursprungs-Netzknoten UK zu mehreren Ziel-Netzknoten Z1, Z4 und Ziel-Endgeräten Z2, Z3 zu übermittelnden Datenpakets. Die Übermittlung erfolgt entlang eines Leitwegs, der vom Ursprungs-Netzknoten UK über Transit-Netzknoten TK1,...,TK5 und lokale Teilnetze LN1 und LN2 zu den Ziel-Netzknoten Z1, Z4 bzw. den Ziel-Endgeräten Z2, Z3 führt. Nicht an der Übermittlung des Datenpakets beteiligte Netzknoten des Kommunikationsnetzes sind in der Zeichnung nicht dargestellt. Der Leitweg wird vor der Übermittlung des Datenpaketes im Ursprungs-Netzknoten UK, z.B. mittels eines bekannten Dijkstra-Algorithmus, in Abhängigkeit von der Topologie des Kommunikationsnetzes bestimmt und in eine den Leitweg beschreibende erste Routingangabe R1 umgesetzt.

Ausgehend vom Ursprungs-Netzknoten UK wird das Datenpaket, wie jeweils durch einen Pfeil angedeutet, von Netzknoten zu Netzknoten weitergegeben. Für die Ziel-Netzknoten Z1 und Z4 verläuft der Leitweg dabei über die Transit-Netzknoten TK1,...,TK5, die zur Weitergabe des Datenpakets jeweils Kennsätze K1,...,K7 der ersten Routingangabe R1 auswerten. Welcher der Kennsätze K1,...,K7 jeweils eine Weitergabe veranlaßt, ist jeweils bei dem zugehörigen Pfeil angegeben. Demgegenüber sind die Ziel-Endgeräte Z2 und Z3 in diesem Ausführungsbeispiel über die lokalen Teilnetze LN1 bzw. LN2 erreichbar, die nicht für eine Auswertung der ersten Routingangabe R1 ausgelegt sind. In diesem Fall wird das Datenpaket - wie ebenfalls bei dem entsprechenden Pfeil angegeben - anhand der IP-Adresse IP weitergeleitet.

Um auch Datenpakete ohne eine Kennsätze enthaltende erste Routingangabe R1 durch das Kommunikationsnetz übermitteln zu können, wird von einem an der Übermittlung beteiligten Netzknoten zunächst überprüft, ob einem Datenpaket auch eine derartige erste Routingangabe R1 zugeordnet ist. Falls keine zugeordnete erste Routingangabe erkannt wird, wird das betreffende Datenpaket gemäß Internet-Protokoll weitergeleitet.

Dem dargestellten Vermittlungsablauf liegt folgende im Ursprungs-Netzknoten UK gebildete, aus 17 aufeinanderfolgenden Kennsätzen bestehende erste Routingangabe R1 zugrunde:
K1, (, ),
(, K2, K3, ) ,
(, K4, K5, (, ),
(, K6, K7, ) ,
) .

Die einzelnen Kennsätze sind hierbei jeweils durch Kommata voneinander getrennt dargestellt. Der Übersichtlichkeit halber ist die erste Routingangabe R1 über mehrere Zeilen verteilt wiedergegeben, wobei öffnende und schließende Klammersymbole gleicher Klammerebene gleich weit eingerückt sind.

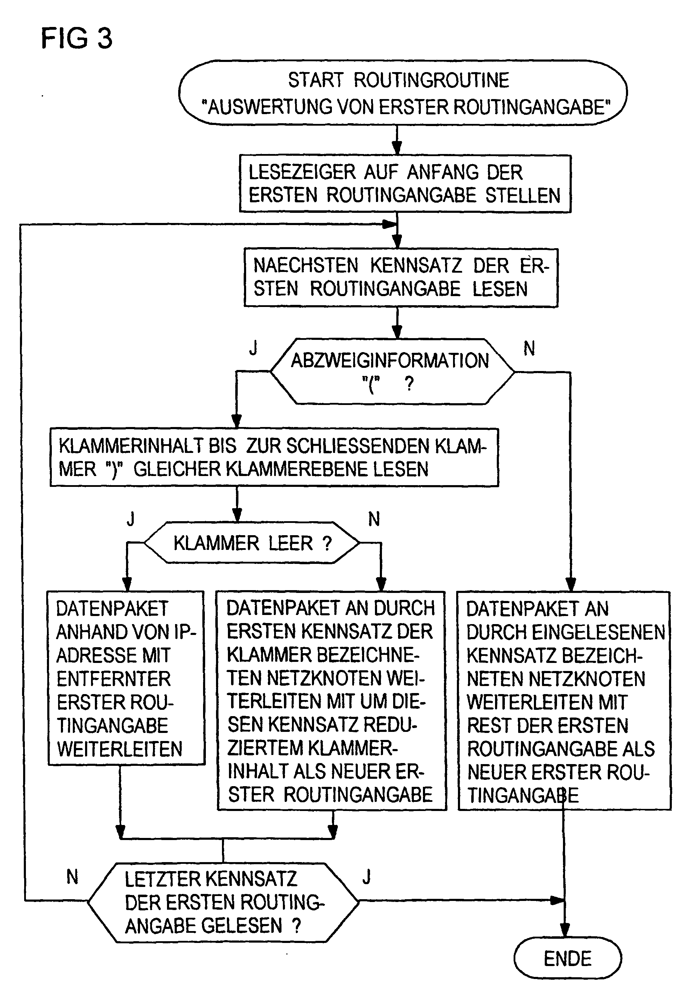

Fig 3 zeigt ein Ablaufdiagramm einer jeweils in den Netzknoten UK und TK1,...,TK5 ablaufenden Routingroutine, durch die Datenpaketen zugeordnete erste Routingangaben ausgewertet werden und abhängig davon eine entsprechende Weiterleitung der Datenpakete veranlaßt wird.

Im Ursprungs-Netzknoten UK wird im Zuge der Auswertung der oben angegebenen ersten Routingangabe R1 durch die Routingroutine zunächst der erste Kennsatz K1 dieser ersten Routingangabe gelesen. Da sich dieser Kennsatz K1 als eine den Transit-Netzknoten TK1 identifizierende Information erweist (und nicht als eine durch eine öffnende Klammer repräsentierte Abzweiginformation), wird das Datenpaket daraufhin an diesen Transit-Netzknoten TK1 weitergeleitet. Dabei wird die ursprüngliche erste Routingangabe durch folgende neue, mit dem Datenpaket zu übermittelnde erste Routingangabe ersetzt, die durch Entfernen des bereits gelesenen Kennsatzes K1 aus der ursprünglichen ersten Routingangabe R1 gebildet wird:
(, ),
(, K2, K3, ) ,
(, K4, K5, (, ),
(, K6, K7, ) ,
).

Im Transit-Netzknoten TK1 wird im Zuge der Auswertung dieser neuen ersten Routingangabe durch die dort ablaufende Routingroutine zunächst der erste Kennsatz gelesen und als Abzweiginformation '(' erkannt, woraufhin diese Routingangabe bis zum schließenden Klammersymbol ')' gleicher Klammerebene gelesen wird. Da sich die erste Klammer als leer erweist, wird diese als Verweis auf die IP-Adresse IP interpretiert. Infolgedessen wird eine Kopie des Datenpakets ohne die neue erste Routingangabe anhand der IP-Adresse IP in das lokale Netz LN1 weitergeleitet, das die Kopie des Datenpakets dann gemäß Internet-Protokoll an das durch die IP-Adresse IP identifizierten Ziel-Endgerät Z2 übermittelt.

Nach dem zuletzt gelesenen, schließenden Klammersymbol wird als nächster Kennsatz wiederum eine Abzweiginformation '(' gelesen. Ein daraufhin bis zu einem korrespondierenden schließenden Klammersymbol eingelesener Klammerinhalt (hier K2, K3) erweist sich als nicht leer, und wird daher als einen Leitwegzweig spezifizierende Teil-Routinginformation interpretiert. Der erste Kennsatz (hier K2) des Klammerinhalts identifiziert dabei den Transit-Netzknoten (hier TK2), an den eine Kopie des Datenpakets zu übermitteln ist. Als erster Routingangabe wird dieser Kopie des Datenpakets der um seinen ersten Kennsatz reduzierte Klammerinhalt - in diesem Fall der Kennsatz K3 - beigefügt.

Auch der nächste im Transit-Netzknoten TK1 gelesene Kennsatz erweist sich als Abzweiginformation '('. Analog zur oben beschriebenen Verfahrensweise wird wiederum ein zugehöriger Klammerinhalt bis zu einem korrespondierenden schließenden Klammersymbol eingelesen und - da nicht leer - als Teil-Routinginformation interpretiert. Durch den ersten Kennsatz K4 dieses Klammerinhalts wird diesmal der Transit-Netzknoten TK3 identifiziert, an den somit ebenfalls eine Kopie des Datenpakets übermittelt wird. Dieser Kopie wird als erster Routingangabe wiederum der um seinen ersten Kennsatz reduzierte Klammerinhalt - in diesem Fall die Folge 'K5, (, ), (, K6, K7, )' - beigefügt.

Mit der Interpretation der zuletzt eingelesenen Klammer ist die dem Transit-Netzknoten TK1 übermittelte erste Routingangabe vollständig ausgewertet, womit die Vermittlung des Datenpakets durch diesen Transit-Netzknoten TK1 abgeschlossen ist. Das Datenpaket bzw. seine Kopien wird im weiteren von den Transit-Netzknoten TK2 und TK3 über die Transit-Netzknoten TK4, TK5 und das lokale Netzwerk LN2 zu den Ziel-Netzknoten Z1, Z4 und zum Ziel-Endgerät Z3 übertragen. Die Auswertung einer von einem Transit-Netzknoten jeweils empfangenen ersten Routingangabe und die Weiterleitung eines dieser zugeordneten Datenpakets erfolgen dabei in jedem beteiligten Transit-Netzknoten TK1,...,TK5 völlig analog zur oben beschriebenen Verfahrensweise.

## Patentansprüche

1. Verfahren zum Übertragen von Datenpaketen in einem Kommunikationsnetz von einem Ursprungs-Netzknoten (UK) zu mehreren Ziel-Netzknoten (Z1, Z4) und/oder Ziel-Endgeräten (Z2, Z3) entlang eines sich verzweigenden Leitwegs, der durch mehrere, für unterschiedliche Routingverfahren vorgesehene Routingangaben (R1, IP) spezifiziert ist, **dadurch gekennzeichnet, daß**
a) im Ursprungs-Netzknoten (UK) eine erste Routingangabe (R1) erzeugt wird,
- die für Verzweigungen des Leitwegs jeweils eine Verzweigungsinformation sowie für jeden Leitwegzweig der betreffenden Verzweigung eine diesen spezifizierende Teil-Routinginformation aufweist und
- die einen Verweis auf eine weitere Routingangabe (IP) enthält,
b) die erste Routingangabe (R1) mindestens einem zu übertragenden Datenpaket zugeordnet wird und zu den auf dem Leitweg dem Ursprungs-Netzknoten (UK) unmittelbar nachfolgenden Netzknoten (TK1) übermittelt wird, und
c) durch eine Routingangabe ein diese empfangender Netzknoten gesteuert wird, wobei
- durch eine Verzweigungsinformation ein Übermitteln eines empfangenen Datenpaketes an jeweils durch die einem Leitwegzweig zugeordnete Teil-Routinginformation bezeichnete, der Verzweigung unmittelbar nachfolgende Netzknoten veranlaßt wird, denen außerdem die jeweilige Teil-Routinginformation mit oder ohne eine jeweils einen dieser Netzknoten bezeichnende Information als Routingangabe übermittelt wird, und wobei
- von dem die Routingangabe empfangenden Netzknoten bei Vorliegen eines auf diesen bezogenen Verweises ein Auswerten der durch den Verweis bezeichneten weiteren Routingangabe (IP) veranlaßt wird, und das empfangene Datenpaket an in dieser weiteren Routingangabe (IP) bezeichnete Netzknoten oder Endgeräte weitergeleitet wird.

2. Verfahren nach Anspruch 1,
**dadurch gekennzeichnet,**
**daß** eine einem einzigen Datenpaket zugeordnete Routingangabe innerhalb eines Paketkopfs dieses Datenpakets übertragen wird.

3. Verfahren nach Anspruch 1,
**dadurch gekennzeichnet,**
**daß** in einem Netzknoten, der eine mehreren Datenpaketen zugeordnete und vor diesen Datenpaketen übertragene Routingangabe empfängt, aus dieser Routingangabe eine Weiterleitungsinformation, für eine Weiterleitung von von diesem Netzknoten aus nachfolgend zu übertragenden, auf diese Routingangabe Bezug nehmenden Datenpaketen, ausgelesen und abrufbar in diesem Netzknoten hinterlegt wird, und
**daß** die hinterlegte Weiterleitungsinformation bei Eintreffen eines auf diese Routingangabe Bezug nehmenden Datenpakets abgerufen und zu dessen Weiterleitung verwendet wird.

4. Verfahren nach Anspruch 1 oder 3,
**dadurch gekennzeichnet,**
**daß** eine Bezugnahme eines Datenpakets auf eine vorab übertragene Routingangabe mit Hilfe einer mit diesem Datenpaket übertragenen, auf diese Routingangabe verweisenden Zuordnungsinformation erfolgt.

5. Verfahren zum Übertragen von Verbindungsaufbaumeldungen in einem Kommunikationsnetz von einem Ursprungs-Netzknoten (UK) zu mehreren Ziel-Netzknoten (Z1, Z4) und/oder Ziel-Endgeräten (Z2, Z3) entlang eines sich verzweigenden Leitwegs, der durch mehrere, für unterschiedliche Routingverfahren vorgesehene Routingangaben (R1, IP) spezifiziert ist, **dadurch** gekennzeichet daß
a) im Ursprungs-Netzknoten (UK) eine erste Routingangabe (R1) erzeugt wird
- die für Verzweigungen des Leitwegs jeweils eine Verzweigungsinformation sowie für jeden Leitwegzweig der betreffenden Verzweigung eine diesen spezifizierende Teil-Routinginformation aufweist und
- die einen Verweis auf eine weitere Routingangabe (IP) enthält,
b) die erste Routingangabe (R1) mindestens einer zu übertragenden Verbindungsaufbaumeldung zugeordnet wird und zu den auf dem Leitweg dem Ursprungs-Netzknoten (UK) unmittelbar nachfolgenden Netzknoten (TK1) übermittelt wird, und
c) durch eine Routingangabe ein diese empfangender Netzknoten gesteuert wird, wobei
- durch eine Verzweigungsinformation ein Übermitteln einer empfangenen Verbindungsaufbaumeldung an jeweils durch die einem Leitwegzweig zugeordnete Teil-Routinginformation bezeichnete, der Verzweigung unmittelbar nachfolgende Netzknoten veranlaßt wird, denen außerdem die jeweilige Teil-Routinginformation mit oder ohne eine jeweils einen dieser Netzknoten bezeichnende Information als Routingangabe übermittelt wird, und wobei
- von dem die Routingangabe empfangenden Netzknoten bei Vorliegen eines auf diesen bezogenen Verweises ein Auswerten der durch den Verweis bezeichneten weiteren Routingangabe (IP) veranlaßt wird, und die empfangene Verbindungsaufbaumeldung an in dieser weiteren Routingangabe (IP) bezeichnete Netzknoten oder Endgeräte weitergeleitet wird.

6. Verfahren nach Anspruch 5,
**dadurch gekennzeichnet,**
**daß** in einem Netzknoten, der eine mehreren Verbindungsaufbaumeldungen zugeordnete und vor diesen Verbindungsaufbaumeldungen übertragene Routingangabe empfängt, aus dieser Routingangabe eine Weiterleitungsinformation, die benötigt wird, um die nachfolgend zu übertragenden, auf diese Routingangabe Bezug nehmenden Verbindungsaufbaumeldungen von diesem Netzknoten aus weiterzuleiten, ausgelesen und abrufbar in diesem Netzknoten hinterlegt wird, und
**daß** die hinterlegte Weiterleitungsinformation bei Eintreffen einer auf diese Routingangabe Bezug nehmenden Verbindungsaufbaumeldung abgerufen und zur deren Weiterleitung verwendet wird.

7. Verfahren nach Anspruch 5 oder 6,
**dadurch gekennzeichnet,**
**daß** eine Bezugnahme einer Verbindungsaufbaumeldung auf eine vorab übertragene Routingangabe durch eine mit dieser Verbindungsaufbaumeldung übertragene, auf diese Routingangabe verweisende Zuordnungsinformation realisiert ist.

8. Verfahren nach einem der Ansprüche 5 bis 7,
**dadurch gekennzeichnet,**
**daß** eine Verbindungsaufbaumeldung durch ein Datenpaket realisiert ist, das den Netzknoten entlang des Leitwegs übermittelt wird, wodurch diese Netzknoten veranlaßt werden, nachfolgend im Rahmen der aufzubauenden Verbindung zu übertragende Datenpakete entlang des Leitwegs weiterzuleiten.

9. Verfahren nach einem der Ansprüche 5 bis 8,
**dadurch gekennzeichnet,**
**daß** in Netzknoten, die eine Verbindungsaufbaumeldung empfangen, eine denjenigen Netzknoten, von dem die Verbindungsaufbaumeldung jeweils empfangen wurde, bezeichnende Leitweginformation der aufzubauenden Verbindung zugeordnet hinterlegt wird, und
**daß** Datenpakete, die im Rahmen der zwischen dem Ursprungs-Netzknoten und den Ziel-Netzknoten und/oder Ziel-Endgeräten aufzubauenden Verbindung von den Ziel-Netzknoten und/oder Ziel-Endgeräten zum Ursprungs-Netzknoten zu übertragen sind, von auf dem Leitweg liegenden Netzknoten anhand der dort jeweils für diese Verbindung hinterlegten, die Richtung zum Ursprungs-Netzknoten weisenden Leitweginformation weitergeleitet werden.

10. Verfahren nach einem der vorhergehenden Ansprüche,
**dadurch gekennzeichnet,**
**daß** eine Verzweigungsinformation aus einer das Ende eines jeweiligen Leitwegzweiges anzeigende Verzweigungspfadendeinformation und einer eine Verzweigung in einem der Netzknoten anzeigende Abzweiginformation besteht.

11. Verfahren nach Anspruch 10,
**dadurch gekennzeichnet,**
**daß** die Abzweiginformation durch eine numerische Information repräsentiert ist, die die Anzahl der zwischen Abzweigung und Ende des Leitwegzweiges liegenden Netzknoten angibt.

12. Verfahren nach Anspruch 10,
**dadurch gekennzeichnet,**
**daß** die Abzweiginformation durch eine reservierte Kodeinformation repräsentiert ist, die durch ihre Position innerhalb der Routingangabe eine Verzweigung markiert.

13. Verfahren nach einem der vorhergehenden Ansprüche,
**dadurch gekennzeichnet,**
**daß** im Ursprungs-Netzknoten (UK) aus einer vorhandenen Routingangabe eine für eine effiziente Auswertung in Netzknoten bestimmter Teilbereiche des Kommunikationsnetzes optimierte, weitere Routingangabe erzeugt wird, auf die von einer anderen Routingangabe aus verwiesen wird.

14. Verfahren nach einem der vorhergehenden Ansprüche,
**dadurch gekennzeichnet,**
**daß** in Kommunikationsnetzen mit Netzknoten in unterschiedlichen Hierarchieebenen, im Ursprungs-Netzknoten (UK) Routingangaben erzeugt werden, die von Netzknoten einer jeweiligen Hierarchieebene ausgewertet werden.

15. Verfahren nach Anspruch 14,
**dadurch gekennzeichnet,**
**daß** zur Spezifizierung eines von einer ersten Hierarchieebene in eine zweite Hierarchieebene führenden Leitwegs in eine für die erste Hierarchieebene gültige Routingangabe ein Verweis auf eine für die zweite Hierarchieebene gültige Routingangabe eingefügt wird.

16. Verfahren nach einem der vorhergehenden Ansprüche,
**dadurch gekennzeichnet,**
**daß** im Ursprungs-Netzknoten (UK) Routingangaben erzeugt werden, die jeweils von Netzknoten in unterschiedlichen Teilbereichen des Kommunikationsnetzes effizient ausgewertet werden können.

17. Verfahren nach Anspruch 16,
**dadurch gekennzeichnet,**
**daß** in eine Routingangabe ein Verweis auf eine weitere Routingangabe so eingefügt wird, daß nach einem Übergang des Leitwegs von einem Teilbereich des Kommunikationsnetzes in einen anderen Teilbereich jeweils die effizienter auszuwertende Routingangabe von den betroffenen Netzknoten ausgewertet wird.

18. Verfahren nach einem der vorhergehenden Ansprüche,
**dadurch gekennzeichnet,**
**daß** ein Verweis auf eine weitere Routingangabe durch eine dafür reservierte Verzweigungsinformation repräsentiert wird.

19. Verfahren nach einem der vorhergehenden Ansprüche,
**dadurch gekennzeichnet,**
**daß** das Kommunikationsnetz ein ATM-Netz ist.

## Claims

1. Method for transmitting data packets in a communications network from a source network node (UK) to a number of destination network nodes (Z1, Z4) and/or destination terminals (Z2, Z3) along a branching route which is specified by a number of routing statements (R1, IP) provided for different routing methods, **characterized in that**
a) a first routing statement (R1) is produced in the source network node (UK),
- which has branching information for each of the branches in the route and has partial routing information, which specifies the route branch, for each route branch of the relevant branch, and
- contains a cross-reference to a further routing statement (IP),
b) the first routing statement (R1) is allocated to at least one data packet to be transmitted, and is transmitted to the network nodes (TK1) immediately following the source network node (UK) on the route, and
c) a routing statement controls the network node receiving this routing statement, with
- branching information initiating transmission of a received data packet through network nodes which are denoted by the partial routing information allocated to a route branch and which immediately follow the branch, to which, furthermore, the respective partial routing information is transmitted, with or without information which in each case denotes one of these nodes, as the routing statement, and with
- the network node which receives the routing statement initiating a valuation of the further routing statement (IP) denoted by the cross-reference when a cross-reference relating to this network node is present, and the received data packet being passed on to network nodes or terminals which are denoted in this further routing statement (IP).

2. Method according to Claim 1,
**characterized in that**
a routing statement which is allocated to a single data packet is transmitted within a packet header of this data packet.

3. Method according to Claim 1,
**characterized in that**,
in a network node which receives a routing statement which is allocated to a number of data packets and is transmitted before these data packets, relaying information, for relaying data packets which are to be transmitted subsequently from this network node and refer to this routing statement, is read from this routing statement and is stored in this network node such that it can be called up, and
**in that** the stored relaying information is called up when a data packet which refers to this routing statement arrives, and is used for relaying said data packet.

4. Method according to Claim 1 or 3,
**characterized in that**
a data packet refers to a previously transmitted routing statement with the aid of allocation information which is transmitted with this data packet and refers to this routing statement.

5. Method for transmitting connection setting-up messages in a communications network from a source network node (UK) to a number of destination network nodes (Z1, Z4) and/or destination terminals (Z2, Z3) along a branching route which is specified by a number of routing statements (R1, IP) provided for different routing methods,
**characterized in that**
a) a first routing statement (R1) is produced in the source network node (UK),
- which has branching information for each of the branches in the route and has partial routing information, which specifies the route branch, for each route branch of the relevant branch, and
- contains a cross-reference to a further routing statement (IP),
b) the first routing statement (R1) is allocated to at least one connection setting-up message to be transmitted, and is transmitted to the network nodes (TK1) immediately following the source network node (UK) on the route, and
c) a routing statement controls the network node receiving this routing statement, with
- branching information initiating transmission of a received connection setting-up message through network nodes which are denoted by the partial routing information allocated to a route branch and which immediately follow the branch, to which, furthermore, the respective partial routing information is transmitted, with or without information which in each case denotes one of these nodes, as the routing statement, and with
- the network node which receives the routing statement initiating a valuation of the further routing statement (IP) denoted by the cross-reference when a cross-reference relating to this network node is present, and the received connection setting-up message being passed on to network nodes or terminals which are denoted in this further routing statement (IP).

6. Method according to Claim 5,
**characterized in that**,
in a network node which receives a routing statement which is allocated to a number of connection setting-up messages and is transmitted before these connection setting-up messages, relaying information which is required in order to relay from this network node various connection setting-up messages which are to be transmitted subsequently and refer to this routing statement is read from this routing statement and is stored in this network node such that it can be called up, and
**in that** the stored relaying information is called up when a data packet which refers to this routing statement arrives, and is used for relaying said connection setting-up message.

7. Method according to Claim 5 or 6,
**characterized in that**
a connection setting-up message refers to a previously transmitted routing statement by means of allocation information which is transmitted with this connection setting-up message and refers to this routing statement.

8. Method according to one of Claims 5 to 7, **characterized in that**
a connection setting-up message is provided by a data packet which is transmitted along the route of the network nodes, as a result of which these network nodes are caused to relay along the route data packets which are to be transmitted subsequently in the course of setting up the connection.

9. Method according to one of Claims 5 to 8, **characterized in that**
routing information of a connection to be set up which denotes that network node from which the connection setting-up message has in each case been received is allocated and stored in network nodes which receive a connection setting-up message, and
**in that** data packets which are to be transmitted from the destination network nodes and/or destination terminals to the source network node in the course of the connection which is to be set up between the source network node and the destination network nodes and/or destination terminals are relayed by network nodes located on the route, using the routing information which is in each case stored there for this connection and indicates the direction to the source network node.

10. Method according to one of the preceding claims,
**characterized in that**
branching information comprises branching path end information which indicates the end of a respective route branch, and branch information which indicates a branch in one of the network nodes.

11. Method according to Claim 10,
**characterized in that**
the branch information is represented by numerical information which indicates the number of network nodes located between the branch and the end of the route branch.

12. Method according to Claim 10,
**characterized in that**
the branch information is represented by reserved code information whose position within the routing statement marks a branch.

13. Method according to one of the preceding claims,
**characterized in that**
a further routing statement, which is optimized for efficient evaluation in network nodes in specific subregions of the communications network, is produced in the source network node (UK) from an existing routing statement, to which further routing statement reference is made from another routing statement.

14. Method according to one of the preceding claims,
**characterized in that**
routing statements which are evaluated by network nodes in a respective hierarchy level are produced in the source network node (UK) in communications networks having network nodes in different hierarchy levels.

15. Method according to Claim 14,
**characterized in that**
a cross-reference to a routing statement which is valid for a second hierarchy level is inserted into a routing statement which is valid for a first hierarchy level in order to specify a route which leads from the first hierarchy level to the second hierarchy level.

16. Method according to one of the preceding claims,
**characterized in that**
routing statements which can each be efficiently evaluated by network nodes in different subregions of the communications network are produced in the source network node (UK).

17. Method according to Claim 16,
**characterized in that**
a cross-reference to a further routing statement is inserted into a routing statement such that, once the route has been transferred from one subregion of the communications network to another subregion, the routing statement, which can be evaluated more efficiently, is in each case evaluated by the relevant network nodes.

18. Method according to one of the preceding claims,
**characterized in that**
a cross-reference to a further routing statement is represented by branching information which is reserved for this purpose.

19. Method according to one of the preceding claims,
**characterized in that**
the communications network is an ATM network.

## Revendications

1. Procédé pour la transmission de paquets de données dans un réseau de communication d'un noeud de réseau d'origine (UK) à plusieurs noeuds de réseau cibles (Z1, Z4) et/ou terminaux cibles (Z2, Z3) le long d'une voie d'acheminement se ramifiant, qui est spécifiée par plusieurs indications de routage (R1, IP) prévues pour différents procédés de routage, **caractérisé en ce que**
a) on génère dans le noeud de réseau d'origine (UK) une première indication de routage (R1),
- qui présente pour des branchements de la voie d'acheminement respectivement une information de branchement ainsi que pour chaque branche de la voie d'acheminement du branchement concerné une information de routage partielle spécifiant cette branche et
- qui contient une référence à une autre indication de routage (IP),
b) la première indication de routage (R1) est attribuée au moins à un paquet de données à transmettre et est transmise aux noeuds de réseau (TK1) qui suivent directement le noeud de réseau d'origine (UK) sur la voie d'acheminement, et
c) un noeud de réseau recevant une indication de routage est commandé par celle-ci,
- une transmission d'un paquet de données reçu à des noeuds de réseau désignés chacun par l'information de routage partielle attribuée à une branche de la voie d'acheminement et suivant directement le branchement étant incitée par une information de branchement, noeuds auxquels l'information de routage partielle respective est également transmise comme indication de routage avec ou sans une information désignant respectivement l'un de ces noeuds de réseau, et
- une analyse de l'autre indication de routage (IP) désignée par la référence étant incitée par le noeud de réseau recevant l'indication de routage en cas de présence d'une référence rapportée à ce noeud, et le paquet de données reçu étant acheminé à des noeuds de réseau ou des terminaux désignés dans cette autre indication de routage (IP).

2. Procédé selon la revendication 1,
**caractérisé**
**en ce qu'**une indication de routage attribuée à un seul paquet de données est transmise à l'intérieur d'un en-tête de paquet de ce paquet de données.

3. Procédé selon la revendication 1,
**caractérisé**
**en ce que** dans un noeud de réseau, qui reçoit une indication de routage attribuée à plusieurs paquets de données et transmise avant ces paquets de données, une information d'acheminement est extraite de cette indication de routage pour un acheminement de paquets de données à transmettre ensuite à partir de ce noeud de réseau et faisant référence à cette indication de routage et est déposée de façon interrogeable dans ce noeud de réseau, et
**en ce que** l'information de transmission déposée est appelée lors de l'arrivée d'un paquet de données faisant référence à cette indication de routage et est utilisée pour son acheminement.

4. Procédé selon la revendication 1 ou 3,
**caractérisé**
**en ce qu'**une référence d'un paquet de données à une indication de routage transmise auparavant est réalisée par une information d'attribution transmise avec ce paquet de données, faisant référence à cette indication de routage.

5. Procédé pour la transmission de messages d'établissement de communication dans un réseau de communication d'un noeud de réseau (UK) d'origine à plusieurs noeuds de réseau cibles (Z1, Z4) et/ou terminaux cibles (Z2, Z3) le long d'une voie d'acheminement se ramifiant, qui est spécifiée par plusieurs indications de routage (R1, IP) prévues pour différents procédés de routage, **caractérisé en ce que**
a) une première indication de routage (R1) est générée dans le noeud de réseau d'origine (UK)
- qui présente pour des branchements de la voie d'acheminement respectivement une information de branchement ainsi que pour chaque branche de la voie d'acheminement du branchement concerné une information de routage partielle spécifiant cette branche et
- qui contient une référence à une autre indication de routage (IP),
b) la première indication de routage (R1) est attribuée au moins à un message d'établissement de communication à transmettre et est transmise au noeud de réseau (TK1) qui suivent directement le noeud de réseau d'origine (UK) sur la voie d'acheminement, et
c) un noeud de réseau recevant une indication de routage est commandé par celle-ci,
- une transmission d'un message d'établissement de communication reçu à des noeuds de réseau désignés respectivement par l'information de routage partielle attribuée à une branche de voie d'acheminement et suivant directement le branchement étant incitée par une information de branchement, noeuds auxquels l'information de routage partielle respective est également transmise comme indication de routage avec ou sans une information désignant respectivement l'un de ces noeuds de réseau, et
- une analyse de l'autre indication de routage (IP) désignée par la référence étant incitée par le noeud de réseau recevant l'indication de routage en cas de présence d'une référence rapportée à ce noeud, et le message d'établissement de communication reçu étant acheminé à des noeuds de réseau ou des terminaux désignés dans cette autre indication de routage (IP).

6. Procédé selon la revendication 5,
**caractérisé**
**en ce que** dans un noeud de réseau, qui reçoit une indication de routage attribuée à plusieurs messages d'établissement de communication et transmise avant ces messages, une information d'acheminement, qui est nécessaire pour acheminer les messages d'établissement de communication à transmettre par la suite et faisant référence à cette indication de routage à partir de ce noeud de réseau, est extraite de cette indication de routage et est déposée de façon interrogeable dans ce noeud de réseau, et
**en ce que** l'information de transmission déposée est appelée lors de l'arrivée d'un message d'établissement de communication faisant référence à cette indication de routage et est utilisée pour son acheminement.

7. Procédé selon la revendication 5 ou 6,
**caractérisé**
**en ce qu'**une référence d'un message d'établissement de communication à une indication de routage transmise auparavant est réalisée par une information d'attribution transmise avec ce message d'établissement de communication, faisant référence à cette indication de routage.

8. Procédé selon l'une quelconque des revendications 5 à 7,
**caractérisé**
**en ce qu'**un message d'établissement de communication est réalisé par un paquet de données qui est transmis aux noeuds de réseau le long de la voie d'acheminement, de sorte que ces noeuds de réseau sont incités à acheminer par la suite des paquets de données à transmettre dans le cadre de la liaison à établir le long de la voie d'acheminement.

9. Procédé selon l'une quelconque des revendications 5 à 8,
**caractérisé**
**en ce que** dans des noeuds de réseau, qui reçoivent un message d'établissement de communication, une information de voie d'acheminement désignant le noeud de réseau duquel le message d'établissement de communication a été respectivement reçu est déposée attribuée à la communication à établir, et
**en ce que** des paquets de données, qui doivent être transmis dans le cadre de la communication à établir entre le noeud de réseau d'origine et les noeuds de réseau cibles et/ou les terminaux cibles depuis les noeuds de réseau cibles et/ou les terminaux cibles au noeud de réseau d'origine, sont acheminés depuis les noeuds de réseau se trouvant sur la voie d'acheminement à l'aide de l'information de voie d'acheminement déposée à cet endroit respectivement pour cette liaison et indiquant la direction du noeud de réseau d'origine.

10. Procédé selon l'une quelconque des revendications précédentes,
**caractérisé**
**en ce qu'**une information de branchement se compose d'une information de fin de chemin de branchement indiquant la fin d'une branche respective de chemin d'acheminement et d'une information de bifurcation indiquant un branchement dans l'un des noeuds de réseau.

11. Procédé selon la revendication 10,
**caractérisé**
**en ce que** l'information de bifurcation est représentée par une information numérique qui indique le nombre des noeuds de réseau situés entre la bifurcation et la fin de la branche de voie d'acheminement.

12. Procédé selon la revendication 10,
**caractérisé**
**en ce que** l'information de bifurcation est représentée par une information de code réservée qui marque un branchement par sa position à l'intérieur de l'indication de routage.

13. Procédé selon l'une quelconque des revendications précédentes,
**caractérisé**
**en ce que**, dans le noeud de réseau d'origine (UK), on génère à partir d'une indication de routage présente une autre indication de routage optimisée pour une analyse efficace dans des noeuds de réseau de certaines zones partielles du réseau de communication, indication à laquelle on fait référence à partir d'une autre indication de routage.

14. Procédé selon l'une quelconque des revendications précédentes,
**caractérisé**
**en ce que**, dans des réseaux de communication avec des noeuds de réseau dans différents niveaux de hiérarchie, on génère dans le noeud de réseau d'origine (UK) des indications de routage qui sont analysées par le noeud de routage d'un niveau de hiérarchie respectif.

15. Procédé selon la revendication 14,
**caractérisé**
**en ce que** pour la spécification d'une voie d'acheminement allant d'un premier niveau de hiérarchie à un second niveau de hiérarchie, une référence à une indication de routage valable pour le second niveau de hiérarchie est insérée dans une indication de routage valable pour le premier niveau de hiérarchie.

16. Procédé selon l'une quelconque des revendications précédentes,
**caractérisé**
**en ce que**, dans le noeud de réseau d'origine (UK), on génère des indications de routage qui peuvent être analysées de façon efficace respectivement par des noeuds de réseau dans différentes zones partielles du réseau de communication.

17. Procédé selon la revendication 16,
**caractérisé**
**en ce qu'**une référence à une autre indication de routage est insérée dans une indication de routage de telle sorte que, après un passage de la voie d'acheminement d'une zone partielle du réseau de communication à une autre zone partielle, on analyse respectivement l'indication de routage à analyser de façon plus efficace du noeud de réseau concerné.

18. Procédé selon l'une quelconque des revendications précédentes,
**caractérisé**
**en ce qu'**une référence à une autre indication de routage est représentée par une information de branchement réservée à cet effet.

19. Procédé selon l'une quelconque des revendications précédentes,
**caractérisé**
**en ce que** le réseau de communication est un réseau ATM.
